# EUROPÄISCHE PATENTSCHRIFT

(11) **EP 0 791 774 B1**
(45) Veröffentlichungstag und Bekanntmachung des Hinweises auf die Patenterteilung: **28.04.1999**
(21) Anmeldenummer: 96119672.2
(22) Anmeldetag: 07.12.1996
(51) Int. Cl.: F16L 5/02, H02G 3/22

(54) **Vorrichtung zum Abdichten eines Schutzrohres**
Device for sealing a protective conduit
Dispositif pour rendre étanche un conduit de protection

(30) Priorität: 24.02.1996 DE 19607085
(43) Veröffentlichungstag der Anmeldung: 27.08.1997
(73) Patentinhaber: Hauff-Technik GmbH & Co. KG, 89542 Herbrechtingen (DE)
(72) Erfinder: Hauff, Werner, 89561 Dischingen (DE)
(74) Vertreter: Weitzel, Wolfgang, Dr.-Ing. Patentanwalt

(56) Entgegenhaltungen:
- US-A- 4 717 608
- US-A- 5 098 752
- US-A- 5 297 585

## Beschreibung

Die Erfindung betrifft eine Vorrichtung zum Abdichten eines Schutzrohres gegen eine durch das Schutzrohr führende Leitung, wie Rohr, Kabel oder dergl., mit einer das Schutzrohr am Rohrende mit der Leitung verbindenden Kaltschrumpfmuffe, die im vorgespannten Zustand ein Dehnungsteil aufweist, insbesondere bei einer Vorrichtung zum Abdichten eines Schutzrohres zur Durchführung der Leitung durch eine Wandöffnung, wobei das Schutzrohr ein in die Wandöffnung einsetzbares Futterrohr ist.

Bei aus der Praxis bekannten Kaltschrumpfmuffen ist der Kaltschrumpfschlauch im vorgespannten Zustand auf einer Stützwendel angeordnet, die nach Positionierung der Kaltschrumpfmuffe auf dem Schutzrohr drehend herausgezogen wird, wobei die Stützwendel sich abwickelt und so der Kaltschrumpfschlauch keine Gegenkraft mehr erfährt und aus seinen vorgespannten, gedehnten Zustand wieder in den ursprünglichen Zustand übergeht. Die Spirale der Stützwendel stört beim Einziehen der Leitung, die sich an einzelnen Spiralwindungen verhaken kann bzw. daran entlangscharrt. Wird die Stützwendel zur Verbindung von Schutzrohr und Leitung entfernt, schaben wieder einzelne Spiralwindungen an der Oberfläche der Leitung entlang, was insbesondere dann störend ist, wenn es sich dabei um ein Kabel handelt und Längsriefen in die relativ weiche Oberfläche des Kabelmantels eingebracht werden. Außerdem wird dabei innerhalb der Kaltschrumpfmuffe befindlicher Schmutz gleichmäßig in dieser verteilt. Die Stützwendel muß vollständig abgewickelt werden und stellt danach Abfall dar, der relativ voluminös ist. Eine Beschichtung auf die Stützwendel in der Kaltschrumpfmuffe kann nicht eingebracht werden.

Aus der US 4 717 608 ist eine Vorrichtung zum Abdichten eines Schutzrohres bekannt, die dazu dient, einen Rohrstutzen, wie beispielsweise einen Hausanschluß hermetisch abzudichten, solange dieser nicht benötigt wird, im Bedarfsfall aber einen leichten Zugang für ein in den Rohrstutzen einzuführendes Kabel sowie nachfolgend eine erneute hermetische Abdichtung zu gewährleisten. Dazu ist die Vorrichtung als Dichtkappe ausgebildet, die aus einem unter Hitzeeinwirkung schrumpfendem Hitzeschrumpfschlauch und einem in das Ende des Hitzeschrumpfschlauches eingesetzten, eine Dichtscheibe tragenden Dichtring besteht. Nach dem Entfernen der Dichtscheibe und dem Durchführen des Kabels wird der Hitzeschrumpfschlauch auf den Rohrstutzen und auf das Kabel mit Hilfe einer externen Hitzequelle aufgeschrumpt, wobei sich der Dichtring lockert und entfernt werden kann. Der Dichtring weist lediglich eine axiale Ausdehnung auf, die einen Bruchteil der des Hitzeschrumpfschlauches entspricht, da der Dichtring nur am Ende des Hitzeschrumpfschlauches benötigt wird und im übrigen Bereich des Hitzeschrumpfschlauches stören und ein unmittelbares Aufschrumpfen auf den Rohrstutzen bzw. das Kabel verhindern würde.

Der Erfindung liegt die Aufgabe zugrunde, eine Vorrichtung der eingangs genannten Art so auszubilden, daß das Entfernen des Dehnungsteils vereinfacht wird und daß eine zuverlässige Abdichtung zwischen Schutzrohr und Leitung erreicht wird.

Diese Aufgabe wird erfindungsgemäß dadurch gelöst, daß das Dehnungsteil als Hülse ausgebildet ist.

Diese Vorrichtung bietet den Vorteil, daß beim Einführen der Leitung in das Schutzrohr und in die Kaltschrumpfmuffe die Leitung an deren glatten Innenwänden entlanggleiten kann. Weiterhin kann das als Hülse ausgebildete Dehnungsteil aus der Kaltschrumpfmuffe herausgezogen werden kann, ohne in Kontakt mit der durch das Schutzrohr und durch die Kaltschrumpfmuffe geführten Leitung zu geraten, wodurch Beschädigungen an der Oberfläche der Leitung nicht auftreten können. Das Volumen von der Hülse ist nach dem Entfernen aus der Kaltschrumpfmuffe unverändert gegenüber dem vorherigen Zustand, so daß sich bei der Verwendung mehrerer Vorrichtungen an einer Arbeitsstelle nicht große Abfallhaufen ergeben.

Eine im Rahmen der Erfindung besonders bevorzugte Ausführungsform ist dadurch gekennzeichnet, daß zwischen der Kaltschrumpfmuffe und der Außenseite der Hülse ein schmierend und dichtend wirkendes Dichtmittel vorgesehen ist.

Durch die mit der Erfindung möglichen Anbringung einer Beschichtung auf dem als Hülse ausgebildeten Dehnungsteil ist die Verwendung des Dichtmittels möglich, wodurch die Dichtungswirkung des Kaltschrumpfschlauches auf der Leitung verbessert wird, u. a. dadurch, daß Unebenheiten und Längsriefen in der Oberfläche der Leitung ausgeglichen werden können. Das Entfernen der Hülse ist weiterhin mit relativ geringem Kraftaufwand möglich, da das Dichtmittel zugleich die Funktion eines Gleitmittels übernimmt.

Nach dem Entfernen der Hülse aus der Kaltschrumpfmuffe ist immer noch die Leitung durch die Hülse geführt, so daß diese nicht ohne weiteres entfernt werden kann, sondern an einer Stelle geöffnet werden muß, was durch Verwendung eines scharfen Messers möglich ist. Im Rahmen der Erfindung ist es vorgesehen, daß die Hülse in Längsrichtung geteilt ist, da so die Hülse in einfacher Weise aufgeweitet und dann von der Leitung entfernt werden kann.

Im Rahmen der Erfindung ist es weiterhin vorgesehen, daß die Hülse in Längsrichtung eine Sollbruchstelle aufweist. Dies bietet Stabilitätsvorteile, da die Hülse auch dann nicht durch den außen aufgebrachten, unter Spannung stehenden Kaltschrumpfschlauch zusammengepreßt werden kann, wenn die Teilungskanten sich nicht gegenseitig abstützen. Nach Entfernung der Hülse aus der Kaltschrumpfmuffe, wenn der Kaltschrumpfschlauch keine Kraft mehr auf die Hülse ausübt, ist nach Durchtrennen der Sollbruchstelle das Aufweiten der Hülse und deren Entfernung von der Leitung genauso einfach möglich wie bei einer in Längsrichtung geteilten Hülse.

Insbesondere bei Leitungen mit einem großen Durchmesser, bei dem die Hülse sehr weit aufgeweitet werden müßte, ist es vorteilhaft, wenn auf der in Umfangsrichtung zur ersten Sollbruchstelle gegenüberliegenden Seite eine zweite Sollbruchstelle angeordnet ist, da dann die Hülse nach dem Durchtrennen der Sollbruchstelle in zwei Schalen zerfällt, die sich platzsparend ineinanderlegen lassen.

Indem die Hülse an dem dem Rohrende abgewandten Ende einen Ringflansch aufweist, wird verhindert, daß das Dichtmittel zwischen Kaltschrumpfschlauch und Außenwand der Hülse herausgepreßt werden kann.

Im Rahmen der Erfindung ist weiterhin vorgesehen, daß die Hülse in Längsrichtung einen auf das Schutzrohr aufschiebbaren ersten Bereich aufweist, dessen Innendurchmesser auf den Außendurchmesser des Schutzrohres abgestimmt ist und daß die Hülse einen daran anschließenden zweiten Bereich aufweist, dessen Innendurchmesser dem Innendurchmesser des Schutzrohres entspricht. Diese Ausgestaltung erleichtert die Durchführung von Leitungen durch das Schutzrohr und die daran angesetzte Kaltschrumpfmuffe, da Kanten und Absätze vermieden werden, an denen sich die Leitung verhaken könnte.

Um das Abziehen der Hülse von dem Ende des Schutzrohres zu erleichtern ist auf der Innenwand der Hülse im ersten Bereich das Dichtmittel aufgetragen, das gleichfalls schmierend wirkt und so als Gleitmittel fungiert.

Im Rahmen der Erfindung ist weiterhin vorgesehen, daß die Kaltschrumpfmuffe an dem dem Rohrende zugewandten Ende der Hülse über diese übersteht und in diesem Abschnitt auf der dem Schutzrohr aufliegenden Innenwand der Kaltschrumpfmuffe ein Kleber aufgetragen ist. Dadurch ist zum einen eine feste Verbindung zwischen Kaltschrumpfschlauch und der Außenwand des Schutzrohres gegeben, zum anderen kann nach Erreichen der vollen Klebkraft des Klebers die Hülse in einfacher Weise abgezogen werden, ohne daß darauf geachtet werden muß, daß auch der Kaltschrumpfschlauch vom Schutzrohr nicht wieder entfernt wird.

Im übrigen muß die erfindungsgemäße Vorrichtung nicht zwingend am Rohrende des Schutzrohres angeordnet werden, sondern kann auch über eine Sollbruchstelle des Schutzrohres plaziert werden.

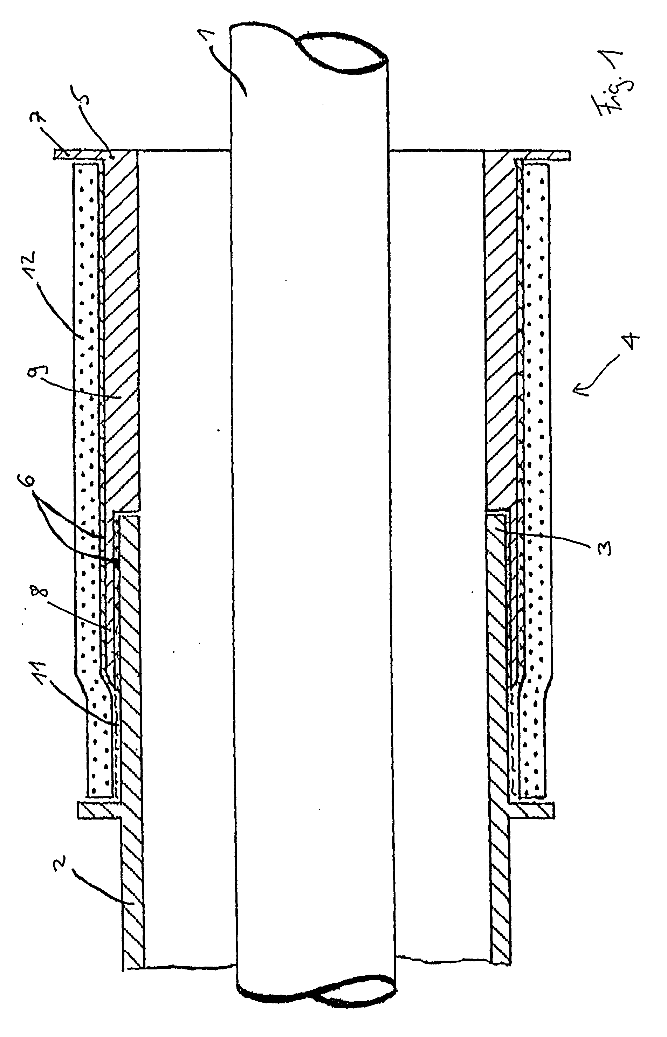

Im folgenden soll die Erfindung an einem in der Zeichnung dargestellten Ausführungsbeispiel näher erläutert werden; die einzige Figur zeigt einen Schnitt durch eine auf dem Rohrende angeordnete Kaltschrumpfmuffe vor dessen Verbindung mit der Leitung.

Die erfindungsgemäße Vorrichtung dient zum Abdichten eines Schutzrohres 2 gegen eine durch das Schutzrohr 2 führende Leitung 1, wie sie durch ein Rohr oder ein Kabel gebildet sein kann. In der Zeichnung ist ein Kabel dargestellt.

Verwendung findet diese Vorrichtung beispielsweise bei der Durchführung der Leitung 1 durch eine Wandöffnung, wobei das Schutzrohr 2 dann ein in die Wandöffnung einsetzbares Futterrohr ist. Die Vorrichtung weist eine am Rohrende 3 des Schutzrohres 2 angeordnete Kaltschrumpfmuffe 4 auf, die einen Kaltschrumpfschlauch 12 besitzt, der vorgespannt ist und in diesem vorgespannten, gedehnten Zustand durch ein Dehnungsteil gehalten ist. Das Dehnungsteil ist als Hülse 5 ausgebildet. Zwischen dem Kaltschrumpfschlauch 12 und der Außenseite der Hülse 5 ist ein Dichtmittel 6 angeordnet, das zum einen die Dichtwirkung zwischen dem Kaltschrumpfschlauch 12 und der Leitung 1 nach Entfernen der Hülse 5 verbessert, zum anderen bei dem Entfernen der Hülse 5 hilft, da es gleichfalls schmierende Eigenschaften hat und so als Gleitmittel fungiert.

Die Hülse 5 ist in Längsrichtung in zwei Bereiche gegliedert, wobei der Innendurchmesser des ersten Bereiches 8 auf den Außendurchmesser des Schutzrohres 2 abgestimmt ist, damit die Hülse 5 auf das Rohrende 3 aufgeschoben werden kann. Im zweiten Bereich 9 entspricht der Innendurchmesser der Hülse 5 dem Innendurchmesser des Schutzrohres 2, so daß der Innendurchmesser über den gesamten Bereich, durch den die Leitung 1 durchgeführt werden muß, unverändert ist. Auf der Innenwand der Hülse 5 ist im ersten Bereich 8 das Dichtmittel 6 aufgetragen, das aufgrund seiner schmierenden Wirkung das Aufschieben und das Entfernen der Hülse 5 von dem Rohrende 3 des Schutzrohres 2 erleichtert.

Der Kaltschrumpfschlauch 12 der Kaltschrumpfmuffe 4 steht an dem dem Rohrende 3 zugewandten Ende der Hülse 5 über diese über. In diesem Abschnitt ist auf der dem Schutzrohr 2 aufliegenden Innenwand des Kaltschrumpfschlauches 12 ein Kleber 11 aufgetragen.

Damit die Hülse 5 nach dem Entfernen aus der Kaltschrumpfmuffe 4 von der Leitung 1 entfernt werden kann, ist nach nicht in der Zeichnung dargestellten Ausführungsformen vorgesehen, daß die Hülse 5 in Längsrichtung geteilt ist. Nach alternativen Ausführungsformen weist die Hülse 5 eine bzw. zwei diametral gegenüberliegende Sollbruchstellen auf.

An dem dem Rohrende 3 abgewandten Ende weist die Hülse 5 einen Ringflansch 7 auf, der ein Herauspressen des Dichtmittels 6 durch den gespannten Kaltschrumpfschlauch 12 verhindert und zusätzlich mechanischen Schutz bietet.

## Patentansprüche

1. Vorrichtung zum Abdichten eines Schutzrohres (2) gegen eine durch das Schutzrohr (2) führende Leitung (1), wie Rohr, Kabel oder dergl., mit einer das Schutzrohr (2) am Rohrende (3) mit der Leitung (1) verbindenden Kaltschrumpfmuffe (4), die im vorgespannten Zustand ein Dehnungsteil aufweist, insbesondere bei einer Vorrichtung zum Abdichten eines Schutzrohres (2) zur Durchführung der Leitung (1) durch eine Wandöffnung, wobei das Schutzrohr (2) ein in die Wandöffnung einsetzbares Futterrohr ist, dadurch gekennzeichnet, daß das Dehnungsteil als Hülse (5) ausgebildet ist.

2. Vorrichtung nach Anspruch 1, dadurch gekennzeichnet, daß zwischen der Kaltschrumpfmuffe (4) und der Außenseite der Hülse (5) ein schmierend und abdichtend wirkendes Dichtmittel (6) vorgesehen ist.

3. Vorrichtung nach Anspruch 1 oder 2, dadurch gekennzeichnet, daß die Hülse (5) in Längsrichtung geteilt ist.

4. Vorrichtung nach einem der Ansprüche 1 bis 3, dadurch gekennzeichnet, daß die Hülse (5) in Längsrichtung eine Sollbruchstelle aufweist.

5. Vorrichtung nach Anspruch 4, dadurch gekennzeichnet, daß auf der in Umfangsrichtung zur ersten Sollbruchstelle gegenüberliegenden Seite eine zweite Sollbruchstelle angeordnet ist.

6. Vorrichtung nach einem der Ansprüche 1 bis 5, dadurch gekennzeichnet, daß die Hülse (5) an dem dem Rohrende (3) abgewandten Ende einen Ringflansch (7) aufweist.

7. Vorrichtung nach einem der Ansprüche 1 bis 6, dadurch gekennzeichnet, daß die Hülse (5) in Längsrichtung einen auf das Schutzrohr (2) aufschiebbaren ersten Bereich (8) aufweist, dessen Innendurchmesser auf den Außendurchmesser des Schutzrohres (2) abgestimmt ist und daß die Hülse (5) einen daran anschließenden zweiten Bereich (9) aufweist, dessen Innendurchmesser dem Innendurchmesser des Schutzrohres (2) entspricht.

8. Vorrichtung nach Anspruch 7, dadurch gekennzeichnet, daß auf der Innenwand der Hülse (5) im ersten Bereich (8) das Dichtmittel (6) aufgetragen ist.

9. Vorrichtung nach einem der Ansprüche 1 bis 8, dadurch gekennzeichnet, daß die Kaltschrumpfmuffe (4) an dem dem Rohrende (3) zugewandten Ende der Hülse (5) über diese übersteht und in diesem Abschnitt auf der dem Rohr (2) aufliegenden Innenwand der Kaltschrumpfmuffe (4) ein Kleber (11) aufgetragen ist.

## Claims

1. A device for sealing a protective tube (2) in respect of a line (1) such as a pipe, cable or the like passing through the protective tube (2), with a cold shrunk sleeve (4) connecting the end (3) of the protective tube (2) to the line (1) and which, in the pretensioned state, has an expansion part particularly in the case of a device for sealing a protective tube (2) for carrying the line (1) through a wall opening, the protective tube (2) being a lining tube adapted for insertion into the wall opening, characterised in that the expansion part is constructed as a sleeve (5).

2. A device according to claim 1, characterised in that between the cold shrunk sleeve (4) and the outer surface of the sleeve (5) there is a sealing means (6) which performs a lubricating and sealing function.

3. A device according to claim 1 or 2, characterised in that the sleeve (5) is divided in the longitudinal direction.

4. A device according to one of claims 1 to 3, characterised in that the sleeve (5) has a predetermined breaking point in the longitudinal direction.

5. A device according to claim 4, characterised in that a second predetermined breaking point is disposed on that side which is opposite the first predetermined breaking point, in the peripheral direction.

6. A device according to one of claims 1 to 5, characterised in that an annular flange (7) is provided at the end of the sleeve (5) which is remote from the tube end (3).

7. A device according to one of claims 1 to 6, characterised in that, in the longitudinal direction, the sleeve (5) has a first portion (8) adapted to be pushed onto the protective tube (2) and the inside diameter of which is attuned to the outside diameter of the protective tube (2) and in that the sleeve (5) has, adjacent thereto, a second portion (9) the inside diameter of which corresponds to the inside diameter of the protective tube (2).

8. A device according to claim 7, characterised in that the sealing means (6) is applied to the inside wall of the first portion (8) of the sleeve (5).

9. A device according to one of claims 1 to 8, characterised in that, at the end of the sleeve (5) which is remote from the tube end (3), the cold shrunk sleeve (4) projects beyond the sleeve (5) and in that an adhesive (11) is, in this portion, applied to the inside wall of the cold shrunk sleeve (4) which rests on the tube (2).

## Revendications

1. Dispositif pour étancher un tube de protection (2) par rapport à une conduite (1) telle que tube, câble ou autre, passant dans le tube de protection (2), le tube de protection (2) étant relié à l'extrémité du tube (3) avec la conduite (1) au moyen d'un manchon (4) fretté à froid, lequel présente un élément de dilatation à l'état précontraint, en particulier dans le cas d'un dispositif pour étancher un tube de protection (2) pour le passage de la conduite (1) au travers d'un passage mural, le tube de protection (2) étant une gaine de chemisage pouvant être placé dans le passage mural, caractérisé en ce que l'élément de dilatation est conçu comme une douille (5)

2. Dispositif selon la revendication 1, caractérisé en ce qu'un agent d'étanchéité ayant une action lubrifiante et d'étanchéité (6) est prévu entre le manchon fretté à froid (4) et la face extérieure de la douille (5).

3. Dispositif selon la revendication 1 ou 2, caractérisé en ce que la douille (5) est divisée dans le sens longitudinal.

4. Dispositif selon l'une des revendications 1 à 3, caractérisé en ce que la douille (5) présente un point de rupture dans le sens longitudinal.

5. Dispositif selon la revendication 4, caractérisé en ce qu'un second point de rupture est disposé sur le côté opposé au premier point de rupture dans le sens circonférentiel.

6. Dispositif selon l'une des revendications 1 à 5, caractérisé en ce que la douille (5) présente une bride annulaire (7) sur l'extrémité opposée à l'extrémité du tube (3).

7. Dispositif selon l'une des revendications 1 à 6, caractérisé en ce que la douille (5) présente dans le sens longitudinal une première zone (8) emboîtable sur le tube de protection (2) dont le diamètre intérieur est adapté au diamètre extérieur du tube de protection (2) et en ce que la douille (5) présente une seconde zone (9) contigüe dont le diamètre intérieur correspond au diamètre intérieur du tube de protection (2).

8. Dispositif selon la revendication 7, caractérisé en ce que l'agent d'étanchéité (6) est appliqué sur la paroi interne de la douille (5) dans la première zone (8).

9. Dispositif selon l'une des revendications 1 à 8, caractérisé en ce que le manchon fretté à froid (4), au droit de l'extrémité de la douille (5) donnant sur l'extrémité du tube (3), déborde au-dessus de celle-ci et qu'une colle (11) est appliquée dans cette zone sur la paroi interne du manchon fretté à froid (4) reposant sur le tube (2).
